Europäisches Patentamt

European Patent Office

Office européen des brevets

(19)

(11) Veröffentlichungsnummer: **0 177 711**
**B1**

(12) **EUROPÄISCHE PATENTSCHRIFT**

(45) Veröffentlichungstag der Patentschrift: **19.09.90**

(21) Anmeldenummer: **85110068.5**

(22) Anmeldetag: **10.08.85**

(51) Int. Cl.$^5$: **G 01 D 5/26**

(54) Positionsmesseinrichtung.

(30) Priorität: **12.10.84 DE 3437515**

(43) Veröffentlichungstag der Anmeldung:
**16.04.86 Patentblatt 86/16**

(45) Bekanntmachung des Hinweises auf die
Patenterteilung:
**19.09.90 Patentblatt 90/38**

(84) Benannte Vertragsstaaten:
**AT CH DE FR GB IT LI NL SE**

(56) Entgegenhaltungen:
**EP-A-0 100 828      US-A-4 132 890**
**DE-A-2 525 314      US-A-4 338 517**
**FR-A-2 466 748      US-A-4 343 992**

**MESSEN + PRÜFEN/AUTOMATIK, Teil 1, Juni
1974, Seiten 371-374, Hans Holzmann Verlag,
Bad Worishofen, DE; Ernst: "Neuere
Entwicklungen bei fotoelektrischen
Längenmessgeräten"**

(73) Patentinhaber: **Dr. Johannes Heidenhain GmbH**
**Postfach 1260**
**D-8225 Traunreut (DE)**

(72) Erfinder: **Feichtinger, Kurt**
**Katzwalchen Nr. 26**
**D-8221 Palling (DE)**

Courier Press, Leamington Spa, England.

## Beschreibung

Die Erfindung bezieht sich auf eine Positionsmeßeinrichtung nach dem Oberbegriff des Anspruchs 1.

Es sind Positionsmeßeinrichtungen bekannt, die als sogenannte Einbau-Winkelmeßeinrichtungen nicht vom Hersteller als fertig montierte Geräte geliefert werden, sondern deren Baugruppen erst beim Kunden an dessen Maschinen zusammengefügt werden. Sollen an diesen Maschinen die Positionsmessungen sehr exakt sein, so müssen die Positionsmeßeinrichtungen für die entsprechende Genauigkeit ausgelegt sein, was zu erheblichem Montage- und Justieraufwand führt.

Eine Teilkreiseinheit besteht aus einer die Winkelteilung tragenden Maßverkörperung, die mit der erforderlichen Genauigkeit auf einem Zentrierbund aufgekittet ist. Diese Teilkreiseinheit wird vom Kunden auf einer Maschinenwelle montiert und auf Rundlauf zentriert. Die Abtastbaueinheit, deren Abtastteilung sehr genau zur Winkelteilung justiert werden muß, wird an einer Montagefläche der Maschine montiert. Dies geschieht mittels eines Montageanschlages an der Abtastbaueinheit, der an einen sehr genau gefertigten, maschinenseitigen Montagebund angesetzt wird. Dieser Montagebund muß deshalb so genau gefertigt werden, weil dessen Abweichung vom Rundlauf der Maßverkörperung zu Meßfehlern führt.

In der EP—A—0 100 828 ist eine derartige Anordnung dargestellt und beschrieben. Dort befindet sich ein Montagebund, der auf einer Anbaufläche konzentrisch zur Antriebswelle angeordnet ist. An diesem Montagebund wird eine Baugruppe (Stator), die die Abtastelemente enthält, radial justiert.

Aus der US—A—4 132 890 ist es bei einer gattungsgemäßen Einrichtung bekannt, eine Baugruppe an Führungen senkrecht zur Montagefläche zu verstellen, wobei ein Anschlag axial lösbar ist. Eine radiale Justierung ist dabei nicht möglich.

Im Grunde wäre der Zentrierbund der Maßverkörperung ein ideales Justierhilfsmittel. Da aber der Montageanschlag der Abtastbaueinheit am Bund anliegen muß, scheidet die Zuhilfenahme des Zentrierbundes aufgrund störender Reibung zwischen Zentrierbund und Montageanschlag aus.

Aus diesem Grund liegt die schwierige exakte Herstellung des Montagebundes beim Maschinenhersteller, der als Maschinenbauer dabei oft an die Grenzen seiner Fertigungsmöglichkeiten gerät, da häufig Toleranzen von wenigen Mikrometern (µm) gefordert sind.

Der Erfindung liegt daher die Aufgabe zugrunde, eine Positionsmeßeinrichtung zu schaffen, die die vorgenannten Nachteile vermeidet, und bei der die zur exakten Justierung erforderlichen baulichen Merkmale bereits durch den Meßgerätehersteller vorgesehen sind.

Diese Aufgabe wird durch eine Positionsmeßeinrichtung gemäß Anspruch 1 gelöst.

Die besonderen Vorteile der erfindungsgemäßen Positionsmeßeinrichtung liegen darin, daß der Maschinenhersteller nur wie bisher die Teilkreiseinheit an seiner Maschine auf Rundlauf zentrieren muß, und zur Montage der Abtastbaueinheit lediglich relativ grob tolerierte Befestigungsschraubenlöcher vorzusehen sind. Die exakte Justierung der Abtastteilung der Abtastbaueinheit zur Meßteilung erfolgt durch einen Montageanschlag und mit Hilfe einer in der Abtastbaueinheit integrierten Führung, wobei der exakte Abtastabstand zwischen der Meßteilung und der Abtastteilung in einfacher Weise durch eine Folie festgelegt wird, die zum Lieferumfang gehört.

Mit Hilfe eines Ausführungsbeispiels soll die Erfindung anhand der Zeichnungen noch näher erläutert werden.

Es zeigt

Figur 1 einen Ausschnitt aus einer montierten Winkelmeßeinrichtung;

Figur 2 einen Ausschnitt der Winkelmeßeinrichtung gemäß Figur 1 entlang der Schnittlinie II/II;

Figur 3 einen Ausschnitt aus der Winkelmeßeinrichtung gemäß Figur 1 im justierten Zustand.

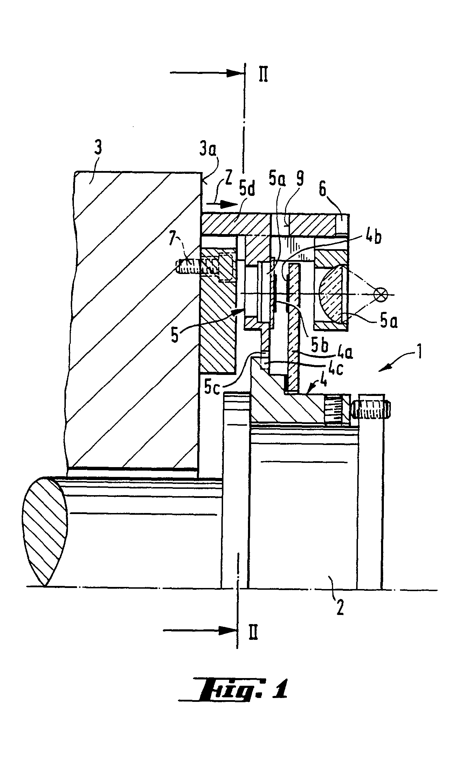

In Figur 1 ist eine Winkelmeßeinrichtung 1 dargestellt, die an einer nicht näher bezeichneten Maschine montiert ist. Mit der Winkelmeßeinrichtung 1 soll die Drehung einer Welle 2 gegenüber einem Stator 3 der Maschine gemessen werden. Dazu ist auf der Welle 2 eine Teilkreiseinheit 4 montiert und auf Rundlauf zentriert. Die Teilkreiseinheit 4 besteht aus einer Maßverkörperung 4a, auf der eine Winkelteilung 4b als Meßteilung aufgebracht ist. Die Maßverkörperung 4a ist als Kreisring ausgebildet und auf einem Zentrierbund 4c genau zentrisch aufgekittet. Die Montage und Zentrierung der Teilkreiseinheit 4 auf der Welle 2 erfolgt mit bekannten Mitteln, so daß hier nicht näher darauf eingegangen werden muß.

Die Winkelteilung 4b wird in bekannter Weise von einer Abtastbaueinheit 5 abgetastet. Dazu weist die Abtastbaueinheit 5 neben anderen bekannten Abtastelementen 5a eine Abtastteilung 5b auf, die sowohl radial als auch axial genau zur Winkelteilung 4b justiert sein muß.

Die radiale Justierung der Abtastteilung 5b erfolgt durch einen Anschlag 5c, mit dem die Abtastteilung 5b eine Baugruppe 5d bildet. Die axiale Justierung erfolgt durch Verschieben der Baugruppe 5d in einer Führung 6, die in einer Richtung senkrecht zur Montagefläche 3a des Stators 3 verläuft.

Nachdem die Teilkreiseinheit 4 in vorbeschriebener Weise montiert und justiert wurde, wird an der Montagefläche 3a des Stators 3 die Abtastbaueinheit 5 mittels Schrauben 7 angebracht. Die Lage der entsprechenden, nicht näher bezeichneten Gewindelöcher im Stator 3 unterliegt relativ groben Toleranzen, die vom Maschinenhersteller leicht eingehalten werden können. Die Abtastbaueinheit 5 weist großzügig bemessene Durchgangslöcher für die Schrauben 7 auf, so daß die Abtastbaueinheit 5 in gewissen Grenzen auf der Montagefläche 3a beweglich ist, und daher justiert werden kann.

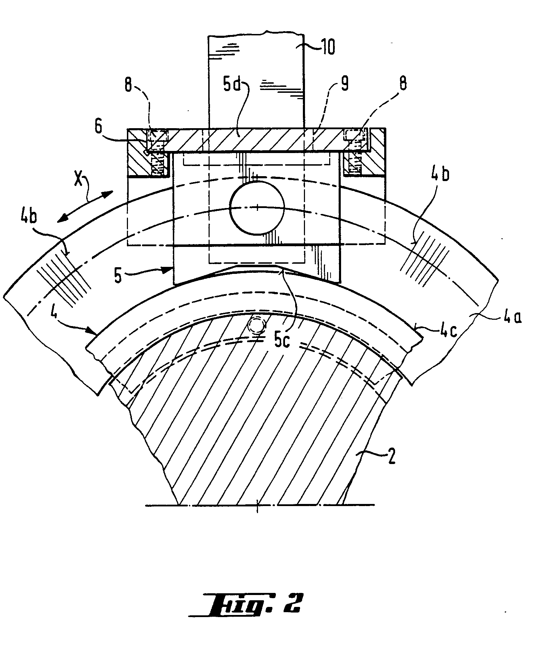

Der erste Schritt des Justiervorganges ist die Ausrichtung der Abtastbaueinheit 5 in radialer Richtung, was durch die Figur 2 verdeutlicht werden soll. Mit Schrauben 8 ist die Baugruppe 5d an der Abtastbaueinheit 5 fixiert. Die Schrauben 7 für die Befestigung der Abtastbaueinheit 5 auf der Montagefläche 3a des Stators 3 sind leicht angezogen, so daß die Abtastbaueinheit 5 gerade noch auf der Montagefläche 3a verschiebbar ist (dies ist in Figur 2 wegen des Schnittverlaufes II/II nich sichtbar).

Die komplette Abtastbaueinheit 5 wird nun radial zum Zentrum der Teilkreiseinheit 4 verschoben, bis der V-förmige Anschlag 5c der Abtastbaueinheit 5 am Zentrierbund 4c der Teilkreiseinheit 4 gut anliegt. Die dabei entstehende Zweipunkt-Anlage gewährleistet eine exakte radiale und zentrische Zentrierung. Anschließend werden die Schrauben 7 fest angezogen, so daß die Abtastbaueinheit 5 sicher in dieser Lage auf dem Stator 3 befestigt ist.

Nun werden die Schrauben 8 soweit gelockert, daß sich die Baugruppe 5d in der Führung 6 senkrecht zur Montagefläche 3a des Stators 3 verschieben läßt. In Figur 2 bedeutet dies, daß die Verschiebung der Baugruppe 5d in die Zeichnungsebene hinein erfolgt. Die Baugruppe 5d ist über nicht dargestellte Federn so vorgespannt, daß sie sich selbsttätig zur Maßverkörperung 4a hin bewegt. Die Abtastbaueinheit 5 weist einen Schlitz 9 auf, durch den von außen eine Folie 10 bestimmter Dicke zwischen die Maßverkörperung 4a, bzw. die Winkelteilung 4b und die Abtastteilung 5b eingeführt werden kann. Die Dicke der Folie 10 entspricht genau dem erforderlichen Abtastabstand zwischen der Winkelteilung 4b und der Abtastteilung 5b. Die Bewegung der Baugruppe 5d erfolgt bis zur Klemmung der Folie 10 zwischen der Baugruppe 5d und der Maßverkörperung 4a. Danach werden die Schrauben 8 fest angezogen und die Folie 10 durch Herausziehen aus dem Schlitz 9 entfernt.

Prinzipiell ist das Einstellen des Abtastabstandes aus einem Aufsatz in der deutschen Zeitschrift MESSEN + PRÜFEN/AUTOMATIK, Teil 1, Juni 1974, Hans Holzmann Verlag, Bad Wörishofen, DE; Ernst: "Neuere Entwicklungen bei fotoelektrischen Längenmeßgeräten", Seite 374, Absatz 1.6 bereits bekannt.

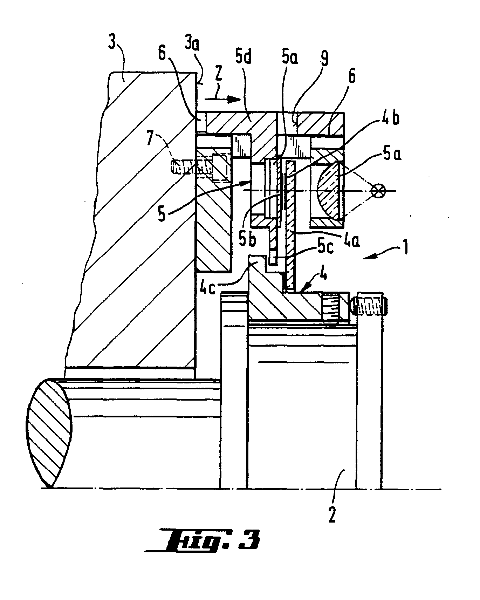

Aus Figur 3 ist ersichtlich, daß sich jetzt die Winkelteilung 4b und die Abtastteilung 5b im exakten Abtastabstand gegenüber liegen. Bei der Justierung der Baugruppe 5d senkrecht zur Montagefläche 3a des Stators 3 gleitet der V-förmige Anschlag 5c vom Zentrierbund 4c, so daß dieser freiliegt. Damit ist die Winkelmeßeinrichtung fertig montiert und justiert. Der ohnehin exakt ausgerichtete Zentrierbund 4c konnte als geeignete Justierhilfe benutzt werden und liegt dennoch frei, so daß keine störende Reibung zwischen Zentrierbund 4c und Anschlag 5c während des Meßbetriebes auftreten kann.

Ferner erübrigt sich bei der erfindungsgemäßen Positionsmeßeinrichtung bei der Montage und Justierung das lästige Hantieren mit empfindlichen Meßtastern und -uhren. Die erforderliche Folie liegt der Meßeinrichtung bei und kann sogar als bedruckte Garantiekarte eine weitere Funktion erfüllen.

Die Erfindung ist nicht auf Winkelmeßgeräte beschränkt, sondern sie ist bei sinngemäßer Umgestaltung verschiedener Bauelemente auch bei Linearmeßeinrichtungen realisierbar.

## Patentansprüche

1. Positionsmeßeinrichtung zur Messung der Lage zweier relativ zueinander beweglicher Objekte, mit einer eine Meßteilung (4b) tragenden Maßverkörperung (4a) und wenigstens einer relativ zur Meßteilung (4b) justierbaren, eine Abtastteilung (5b) tragenden Abtastbaueinheit (5), wobei die zu messenden Objekte Montageflächen (3a) zur exakten Justierung der Abtastteilung (5b) relativ zur Meßteilung (4b) aufweisen und wobei die Abtastbaueinheit (5) einen parallel zur Maßverkörperung (4a) und senkrecht zur Meßrichtung wirksamen Anschlag (5c) aufweist, der mit der Abtastteilung (5b) eine Baugruppe (5d) bildet, dadurch gekennzeichnet, daß die Baugruppe (5d) in einer Führung (6) der Abtastbaueinheit (5) senkrecht zur Montagefläche (3a) verstellbar und in jeder Stellung arretierbar ist, und daß die Abtastbaueinheit (5) so beschaffen ist, daß beim Erreichen des Abtastabstandes zwischen der Abtastteilung (5b) und der Meßteilung (4b) der Anschlag (5c) von einer korrespondierenden, genau zur Meßteilung (4b) ausgerichteten Anschlagfläche (4c) freiliegt.

2. Positionsmeßeinrichtung nach Anspruch 1, dadurch gekennzeichnet, daß die Meßteilung eine Winkelteilung (4b) ist, die mit einem Zentrierbund (4c) eine Teilkreiseinheit (4) bildet, daß der Anschlag (5c) der Abtastbaueinheit (5) V-förmig ausgebildet ist und zur radialen Justierung der Abtastbaueinheit (5) an zwei Punkten des Zentrierbundes (4c) anliegt.

3. Positionsmeßeinrichtung nach Anspruch 1, dadurch gekennzeichnet, daß zur Justierung des Abtastabstandes eine Abstandsfolie (10) zwischen Maßverkörperung (4a) und Baugruppe (5d) vorgesehen ist.

## Revendications

1. Dispositif de mesure de position pour mesurer la position de deux objets mobiles l'un par rapport à l'autre, comprenant une règle de mesure (4a) portant une graduation de mesure (4b) et au moins un module d'exploration (5) réglable par rapport à la graduation de mesure (4b) et portant une graduation d'exploration (5b), les objets à mesurer présentant des surfaces de montage (3a) en vue du réglage exact de la graduation d'exploration (5b) par rapport à la graduation de mesure (4b) et le module d'exploration (5) présentant une butée (5c) qui est active parallèlement à la règle de mesure (4a) et perpendiculairement à la direction de mesure et qui forme un sous-module (5d) avec la graduation d'exploration (5b), caractérisé par le fait que le sous-module (5d) et réglable dans un guidage (6) du module d'exploration (5) perpendiculairement à la surface de montage (3a) et peut être bloqué dans chaque position, et que le module d'exploration (5) est conçu de manière que lorsque la distance d'exploration entre la graduation d'exploration (5b) et la graduation de mesure (4b) est atteinte, la butée (5c) soit dégagée d'une surface de butée (4c) correspondante, alignée avec précision par rapport à la graduation de mesure (4b).

2. Dispositif de mesure de position suivant la revendication 1, caractérisé par le fait que la graduation de mesure est une graduation angulaire (4b) qui forme un module de cercle gradué (4) avec un rebord de centrage (4c), que la butée (5c) du module d'exploration (5) est réalisée en forme de V et, en vue du réglage radial du module d'exploration (5), est appliquée en deux points du rebord de centrage (4c).

3. Dispositif de mesure de position suivant la revendication 1, caractérisé par le fait qu'en vue du réglage de la distance d'exploration, il est prévu une feuille d'espacement (10) entre la règle de mesure (4a) et le sous-module (5d).

**Claims**

1. Position measuring device for measuring the position of two objects movable relative to each other, with a measuring unit (4a) carrying a measuring graduation (4b) and at least one sensing module (5) carrying a sensing graduation (5b) adjustable relative to the measuring graduation (4b), wherein the objects to be measured have mounting surfaces (3a) for exact alignment of the sensing graduation (5b) relative to the measuring graduation (4b) and wherein the sensing module (5) has a stop (5c) acting parallel to the measuring unit (4a) and perpendicular to the measuring direction, which forms a structural unit (5d) with the sensing graduation (5b), characterized in that the structural unit (5d) is adjustable in a guide (6) of the sensing module (5) perpendicular to the mounting surface (3a) and can be arrested in any position, and in that the sensing module (5) is so formed that, on attaining the sensing spacing between the sensing graduation (5b) and the measuring graduation (4b), the stop (5c) lies clear of a corresponding stop surface (4c) arranged precisely relative to the measuring graduation (4b).

2. Position measuring device according to claim 1, characterized in that the measuring graduation is an angular graduation (4b), which forms with a centring flange (4c) an angular scale unit (4), in that the stop (5c) of the sensing module (5) is V-shaped and bears on the centring flange (4c) at two points for the radial adjustment.

3. Position measuring device according to claim 1, characterized in that a feeler gauge (10) is provided between measuring unit (4a) and module (5d) for the adjustment of the sensing spacing.

**Fig. 1**

Fig. 2

Fig. 3